# EUROPEAN PATENT SPECIFICATION

(11) **EP 2 774 130 B1**
(45) Date of publication and mention of the grant of the patent: **02.12.2020**
(21) Application number: 12790638.6
(22) Date of filing: 29.10.2012
(51) Int. Cl.: G08B 21/02, G08B 21/22, G08B 21/24, B60N 2/00, B60R 21/015

(54) **ALARM SYSTEM**
ALARMSYSTEM
SYSTÈME D'ALARME

(30) Priority: 31.10.2011 IT FI20110237
(43) Date of publication of application: 10.09.2014
(73) Proprietor: Palladino, Raffaele, 80145 Napoli (IT)
(72) Inventor: Palladino, Raffaele, 80145 Napoli (IT)
(74) Representative: Mincone, Antimo
(86) International application number: PCT/IB2012/002159
(87) International publication number: WO 2013/064877

(56) References cited:
- WO-A2-2006/113734
- FR-A1- 2 943 825
- US-A1- 2003 062 996
- US-A1- 2006 273 917
- US-A1- 2007 222 622
- US-A1- 2008 316 043
- US-A1- 2010 078 978
- US-A1- 2010 253 504

## Description

The present invention relates to an alarm system. More specifically, an alarm system in accordance with the present invention is intended to emit an alarm signal directed to the driver when the latter moves away from the car forgetting a child in the car fastened to a safety seat.

It 'well known that leaving children in the car forgetting of their presence on board can have tragic effects, taking into account that the temperature inside a vehicle exposed to solar radiation reaches intolerable values in a very short time and can lead to death by hyperthermia. The phenomenon of the deaths and damage to health caused by hyperthermia in children forgotten in cars is unfortunately frequent. Equally fatal consequences can result from forgetting children in cars in the winter due to hypothermia, which can occur in a relatively short time especially in the colder periods of the year.

US2003/062996 discloses an alarm system for child safety seats in which the male and female elements of the closure constitute electrical contacts which are closed or open depending on whether the seat belt has been fastened or not. Since these elements are electrical parts of the alarm system, it is essential that they are metallic and that they are always perfectly clean and free of oxides to ensure their perfect contact. The alarm system described in US2003/062996 provides that the said elements are components of the locking system, as constituted by the buckle and the plug, and, at the same time, the electrical components of the alarm system, thus playing a dual mechanical function and electric. However, the electrical function of said components cannot be guaranteed if the mechanical function is compromised or if, as mentioned above, they are dirty or oxidized.

US2010/078978, WO2006/113734, FR2943825, US2010/253504 and US2006/273917 disclose alarm systems based on the use of sensors not associated with the mechanical part of the locking system.

The main purpose of the present invention is to provide a more reliable alarm system that enables to alert the driver that the child has been left in the car fastened to the safety seat. This result is achieved, according to the present invention, by adopting the idea of realizing an alarm system having the characteristics indicated in claim 1. Other features of the invention are the subject of the dependent claims.

An alarm system in accordance with the present invention is simple from both the construction and operational point of views, and is safe and not expensive to be made. Moreover, since the alarm function is activated automatically when the belts which form the harness of the seat are fastened, the driver must not take any further action, what constitutes a further advantage in terms of operational safety.

These and other advantages and features of the present invention will be best understood by anyone skilled in the art thanks to the following description and to the attached drawings, given by way of example but not to be considered in a limiting sense, in which:
- Fig.1 is a simplified block diagram of an alarm system in accordance with the present invention;
- Fig.2 is a simplified block diagram of possible modes of operation of an alarm system in accordance with the present invention;
- Fig.3 is a simplified view in rear perspective of alarm system in accordance with the present invention in non-operating configuration;
- Fig.3A is an enlarged detail of Fig.3;
- Fig.4 is a perspective rear view of the alarm system of Fig.3 in operating configuration;
- Fig.4A is an enlarged detail of Fig.4;
- Fig.5 is a front perspective view of the alarm system of Fig.3 in operating configuration;
- Fig.6 is a front view of the alarm system of Fig.3 in operating configuration;
- Fig.7 shows a view in section along the line AA of Fig.6;
- Fig.8 shows a rear view of the alarm system of Fig.3 in the non-operating configuration;
- Fig.8A is an enlarged detail of Fig.8;
- Fig.9 shows a front perspective view evidencing a locking group or assembly of the alarm system of Fig.3 in the non-operating configuration;
- Fig.10 is a front view of the locking assembly of Fig.9 in the non-operating configuration;
- Fig. 10A is an enlarged detail of Fig.10;
- Fig.11 is a front view of the locking assembly of Fig.9 in the operating configuration;
- Fig.11A is an enlarged detail of Fig.11;

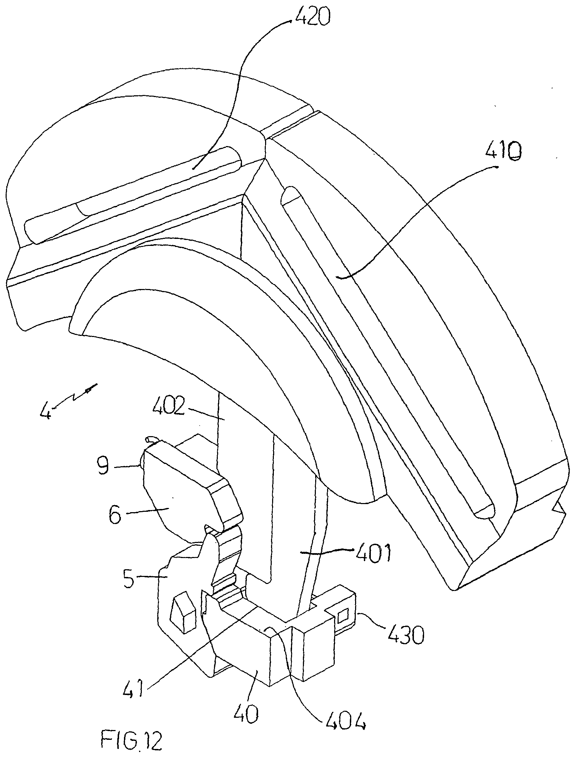

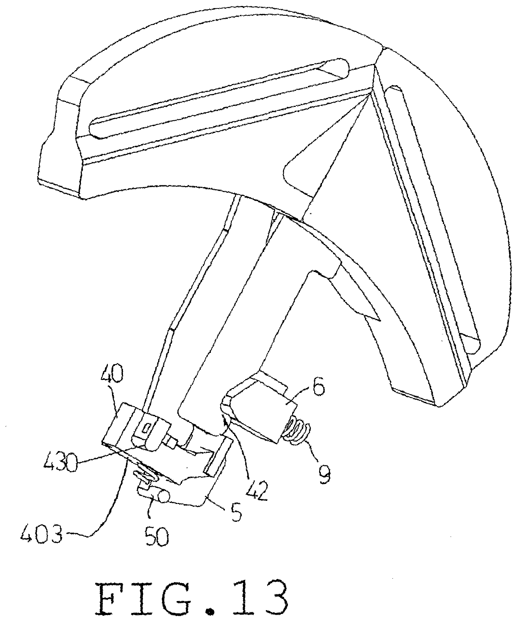

- Figs.12, 13 and 14 are simplified perspective views of the group of locking/unlocking of the plug. Reduced to its essential structure and with reference to the accompanying drawings, an alarm system in accordance with the present invention comprises a battery powered transmitter (1) of wireless signals and a corresponding battery powered receiver (2) provided with a buzzer and/or light and/or vibration emitter.

As further described below, the transmitter (1) is housed in a buckle (3) of the harness of a car seat for children of motor vehicles (of known type and mandatory use in many countries), actuated by a plug (4) of the same harness, so the status of the transmitter (1) depends on the state of closure or opening of the harness.

The plug (4) has two parallel parts (401) and (402) with a "L"-shaped profile , each connected to one of the belts which form the harness by means of a corresponding eyelet (410, 420). The part (402) is shorter than the part (401) and has a recess (42) facing the outside of the plug (4).

The receiver (2) can be transported by the driver by hooking it, for example, the keychain of the vehicle.

Considering the harness closed, i.e. with the plug (4) inserted into the buckle (3), until the transmitter (1) and the receiver (2) are at a distance such as to maintain the wireless connection (for example, at a distance of less than five meters), the detector of which the receiver (2) is provided is inactive. Conversely, when the driver leaves the car with the receiver (2) coupled for example the keychain, and the harness of the seat remains closed, once reached the above-mentioned distance, the wireless link between the transmitter (1) and the receiver (2) is interrupted automatically and the aforementioned detector is activated alarming the driver who, thus, will be induced to return back to the car to open the harness, pulling out the plug (4) of the belt from the buckle (3) and freeing the child forgotten in the safety seat.

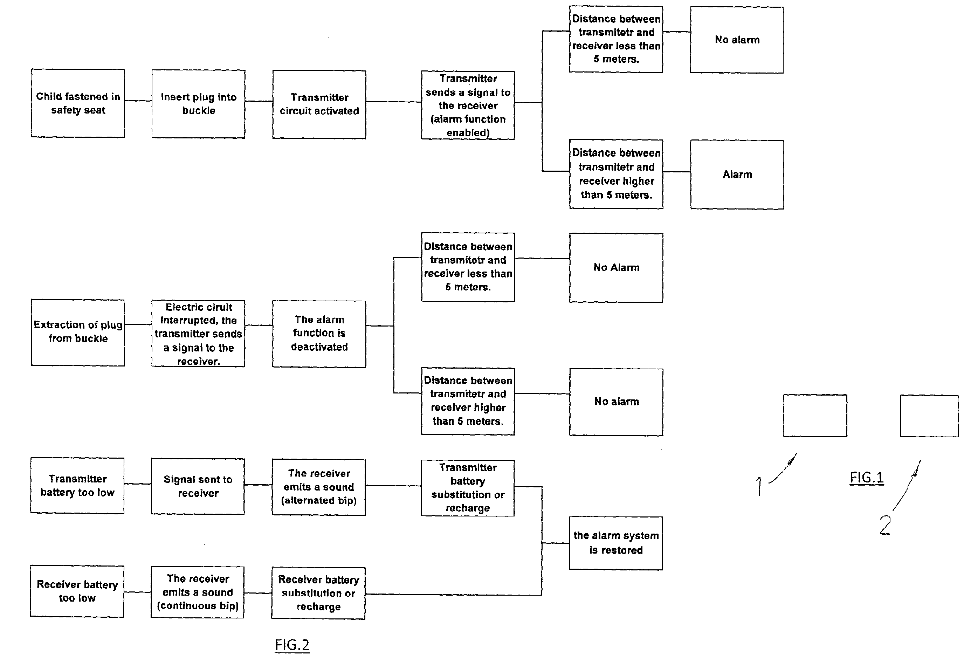

The block diagram of Fig.2 synthetically represents possible status conditions and operation of the alarm system concerned.

The following description refers to a possible example of practical realization of the alarm system.

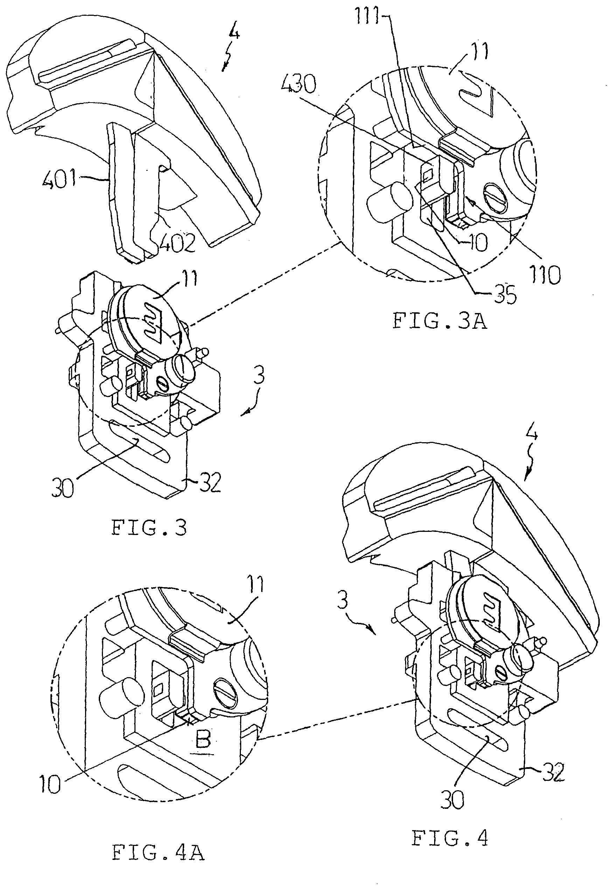

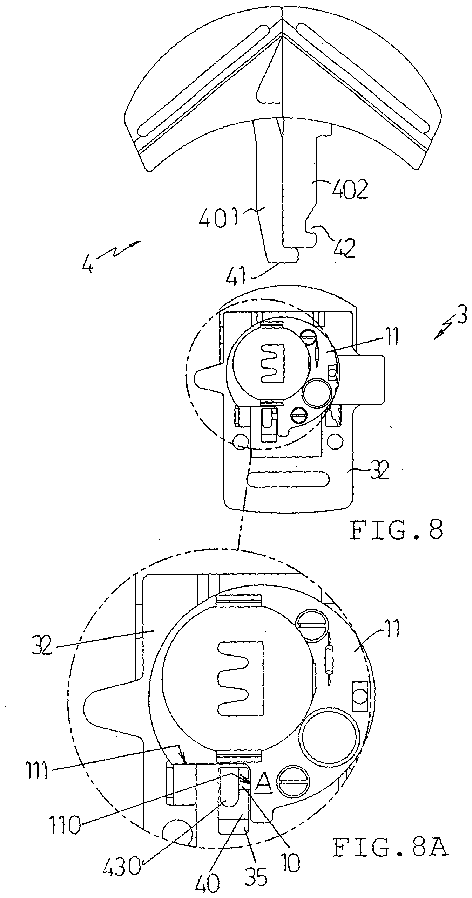

As shown in Figures 8, 8A, the transmitter (1) is constituted by a printed circuit (11) located internally to the buckle (3), i.e. in the space delimited by the respective housing (of which the representation is omitted in order to better highlight internal parts of the buckle 3). This circuit (11) may be of any known type so that its architecture is not disclosed further. The circuit (11) of the transmitter (1) is provided with a switch for activation/deactivation of the alarm function that, in the proposed example, is a slide switch (10) visible, in particular, in Figs 3 - 4A. The switch (10) can assume a raised position (A) for the deactivation of the alarm function and a lowered position (B) of activation of this function. In other words, when the cursor switch (10) is in position (A), the transmitter (1) disables the alarm function while when it is in position (B) the alarm function is activated. The circuit (11) of the transmitter (1) has a substantially discoidal shape missing of an angular sector where it is delimited by two sides (110, 111) orthogonal to each other. The said switch (10) is fixed on the circuit (11) so as to protrude beyond one of said sides (over the side 110 in the drawings). In other words, the run of the cursor switch (10) is parallel to the side (110) and of a value such that it does not interfere with the other side (111).

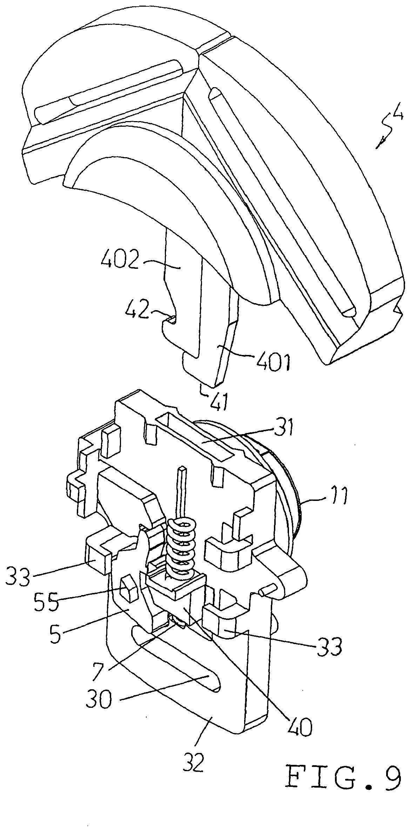

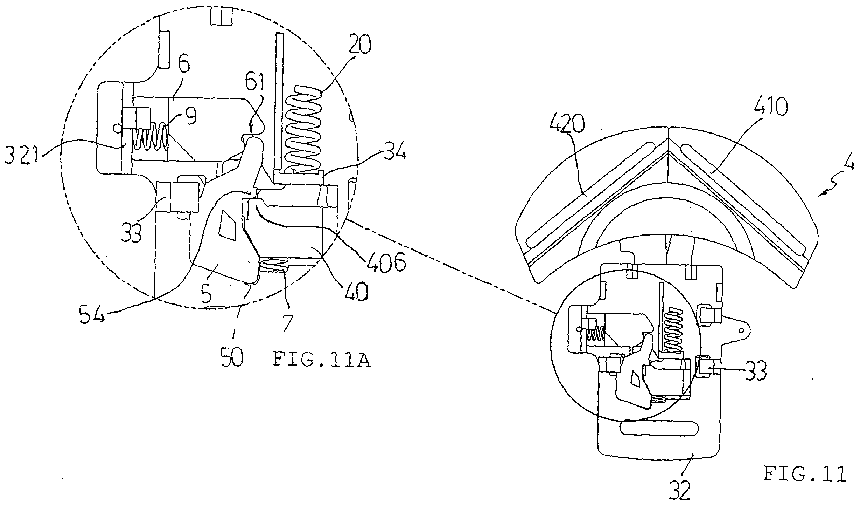

Furthermore, as shown in Figs. 3-11A, the buckle (3) comprises a plate (32). The latter has, on its lower side, a slot (30) useful to connect it to the seat via a belt anchorage and, on the opposite side, has a slit (31) visible in Fig. 9, in which the plug (4) can inserted, as further described below.

The slot (30) and the slit (31) of the buckle (3) are oriented orthogonally relative to one another. Below the slit (31) and in correspondence of the latter, is housed a first movable body (40) forming part of a locking and releasing group or assembly operated with the insertion of the plug (4) into the buckle (3). Such a body (40) is constrained to a vertical motion and is pushed upwards by a spring (7), so that it can assume a raised position (when the plug 4 is out of the slot 31, i.e. when the plug 4 is not locked in the buckle 3, and the spring 7 is extended) and respectively a lowered position (when the plug 4 is fully inserted into the slot 31, i.e. when the tab 4 is locked in the buckle 3, and the spring 7 is compressed).

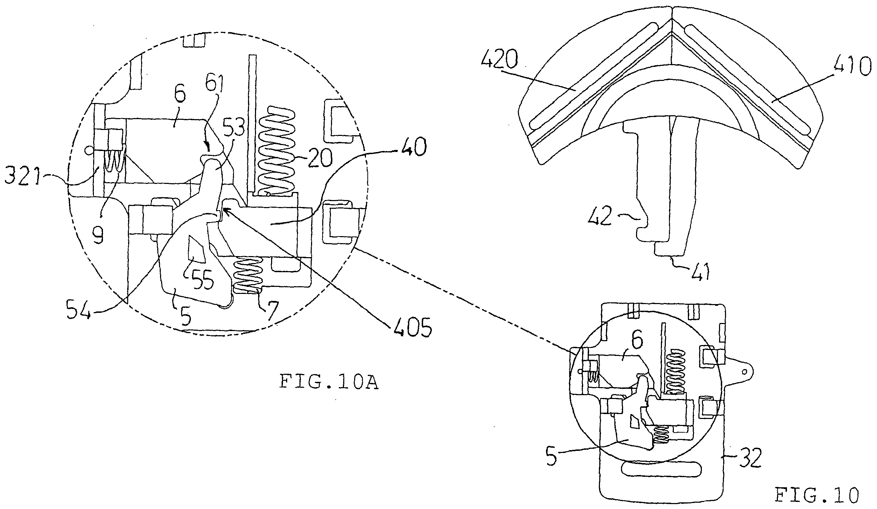

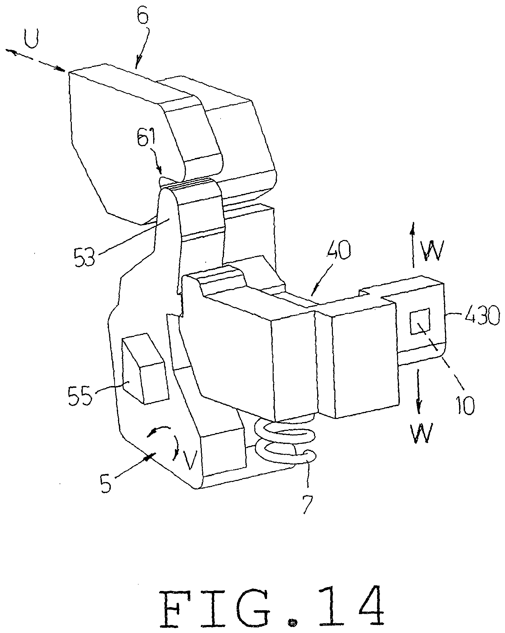

Other two bodies (5, 6) form said locking assembly of the plug (4) together with the body (40). The movements of the bodies (5), (6) and (40) are shown in Fig.14 respectively with the arrows (V), (U) and (W). The body (5) is interposed between the bodies (40) and (6) as shown in Figs 10-11A. The body (6) is pushed against the body (5) by means of a spring (9) which rests on an appendix (321) integral with the plate (32). The axis of the spring (9) is orthogonal to the axis of the spring (7), so that the forces exerted by these springs on the bodies (40) and (6) are mutually orthogonal. In other terms, the bodies (40) and (6) are constrained to move in mutually orthogonal directions: the body (40) moves parallel to the slit (31) of the plate (32), while the body (6) moves perpendicularly to the same slit.

The body (6) has a tooth (61) shaped to concentrate the thrust of the same body (6) on a corresponding tooth (53) of the body (5). The body (5) is hinged at a lower part thereof by means of a transverse pin (50) inserted into a corresponding hole of the plate (32). Therefore, under the thrust of the body (6), the body (5) rotates clockwise remaining against the body (40). The body (40) has an upper surface (404) of shape compatible with that (41) of the distal base of the plug (4) and a bottom surface (403) on which acts the counteracting spring (7) which push it upwards. The contrast spring (7) rests on a horizontal surface (322) formed in the body of the buckle (3). In non-operating configuration of the clamping assembly, a projection (54) of the body (5) is inserted in a lateral indentation (405) of the body (40).

To switch from the non-operating configuration to the operative configuration, the latter being the configuration in which the plug (4) is locked, by inserting the plug (4) in the slit (31) and then applying on it a force (F1) of sufficient magnitude, the base of the plug (41) is pressed on the surface (404) of the body (40) overcoming the resistance of the spring (7) and moving the same body (40) downwards to bring it to a configuration in which the projection (54) of the body (5) is freed from the contact with the back side (405) of the body (40). In such a configuration, the body (5), under the thrust of the body (6) is thus free to rotate in a clockwise direction around the axis of the respective rear hinge until the projection (54) is positioned above a tooth (406) of the body (40), thereby retaining the latter in the said configuration.

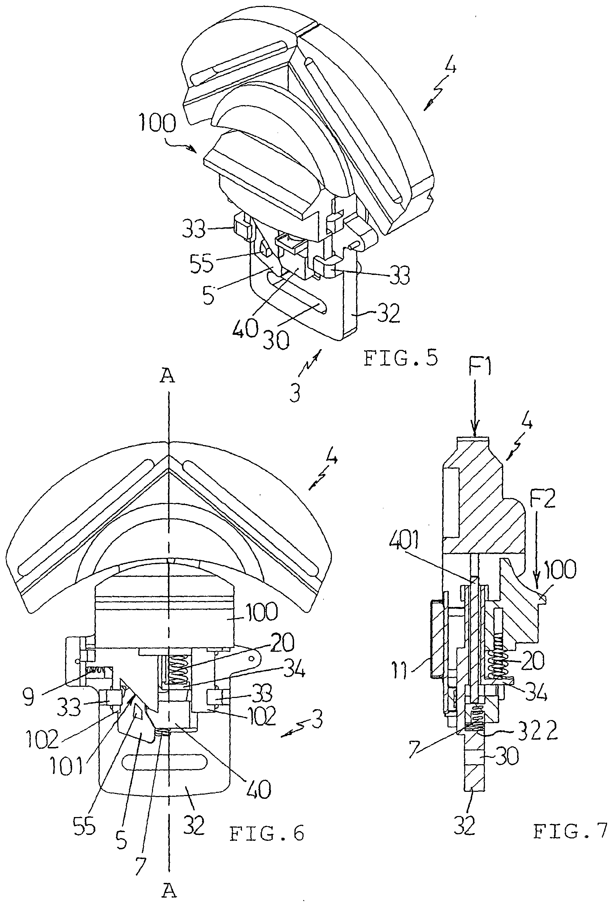

During the rotation of the body (5), the body (6) pushed by the spring (9) is inserted in the recess side (42) of the plug (4) thus locking it firmly inside the buckle (3). Ultimately, the plug (4) is locked in the buckle (3) by inserting and pressing it with a force (F1) in the slit (31) of the same buckle (3). To release the plug (4) from the buckle (3), it is sufficient to cause a rotation of the body (5) counterclockwise, thus obtaining a movement opposite to that of locking. This movement is caused by applying a force (F2) on a release button (100), shown in Fig.7. The said release button (100) is constrained to slide longitudinally with respect to the buckle, being coupled to a pair of guides (33) presented by the latter. Said guides (33) are two appendixes formed on a front side the buckle (3) and shaped so as to retain and drive without interference the same button (100) which for this purpose exhibits two stems (102) sliding in the guides (33). Under the action of a spring (20) the release button (100) is pushed upwards. The lower part of the spring (20) rests on a plate (34) that is integral with the buckle (3).

By pushing the release button (100) downwards with a force (F2) of sufficient magnitude to overcome the resistance of the spring (20), a surface (101), formed in the same button (100), press on a relief (55) of the body (5). This causes a counterclockwise rotation of the body (5) making thus move back the body (6), compressing the spring (9), and lift the body (40) under the thrust of the spring (7). In this way, the body (6) is made to exit from the side recess (42) of the plug (4), thus releasing the latter from the buckle (3). After the extraction of the plug (4), the position reached by the body (5) is maintained because the projection (54) of the same body (5) is placed in the recess (405) of the body (40). Therefore, the tooth (53) of the body (5) by pressing on the body (6) holds it in the retracted position, i.e. in the configuration in which the spring (9) is compressed. The locking assembly thus assumes the configuration previously described, i.e. the configuration assumed prior to insertion of the plug (4) into the buckle (3), shown in Fig. 10A.

Since the switch (10) is connected to the body (40) as described below, the displacement of the same body (40) determined by the insertion of the plug into the buckle, and respectively by its extraction, causes the activation or deactivation of the alarm function of the transmitter (1). In fact, the body (40) is placed in correspondence of a slot (35) of the plate (32) oriented parallel to the said slit (31). A transverse appendix (430) of the body (40) is positioned passing through the slot (35). In this way, the body (40) extends and protrudes on the other side of the plate (32). The said appendix (430) is hooked on the switch (10) that, in this way, is controlled by the displacement of the body (40) .

Therefore, when the plug (4) is fully inserted and locked into the buckle (3), the body (40) - through its appendix (430) - put the switch (10) in the lowered position enabling the alarm function of the transmitter (1). Conversely, when the plug (4) is released and extracted from the buckle (3), the body (40) is lifted as described above, by placing the switch (10) in the raised position and thus deactivating the alarm function of the transmitter (1).

In the configuration in which the alarm function of the transmitter (1) is enabled, until the same transmitter (1) is located at a distance such as to maintain the wireless connection with the receiver (2), the receiver (2) does not emits any alarm. Conversely, when the driver leaves the car with the keychain to which the receiver (2) is hooked and exceeds the above-mentioned distance, the wireless link between the transmitter (1) and the receiver (2) is interrupted and automatically activates the aforementioned detector alerting the driver who, thus, will be induced to go back to the car to release the belt, by pulling out the plug (4) from the buckle (3), and thereby freeing the forgotten child in the seat.

It is understood that the structure of the mechanism for locking /releasing the plug (4) can be of any other type including, however, a release button.

In any case, the positioning of the plug (4) into the buckle (3) determines the activation of the alarm function of the transmitter (1) as a portion of the same plug (the part 41 in the example described above) determines, in relation to its position in the buckle (3), the displacement of a switch (10) of the transmitter circuit (1) from a alarm function deactivation position (A) to an alarm function activation position (B).

From what has been described above, it is evident that the plug (4) does not constitute a component of the switch (10) but is a means to control the switch (10) that, in turn, is not a component of the locking/unlocking assembly.

Therefore, the plug (4), as well as the buckle (3), can be of any material, even non-metallic and the electrical function of the alarm system is decoupled from the mechanical function of the harness closing system, so that the electrical function is guaranteed even if on the plug (4) and or on the buckle (3) there are deposits of dust or grease or oxides and so on.

In practice the details of execution may vary in any equivalent way as for what concerns their size, their conformation and the arrangement of the individual elements described and illustrated without thereby departing from the scope of the adopted solution and thus remaining within the limits of the protection granted by the present patent.

## Claims

1. Alarm system, comprising a transmitter unit (1) and a receiving unit (2) operating in wireless mode, in which the receiving unit (2) emits a luminous and/or acoustic and/or vibration alarm signal when the distance between said units (1, 2) exceeds a preset value, and in which the transmitting unit (1) is provided with a switch (10) whose state (A, B) determines the activation or deactivation of an alarm function of the alarm system, wherein
- said transmitting unit (1) is integral to the buckle (3) of the harness of a children safety seat for motor vehicles, the harness comprising a predetermined number belts separately connected to the same buckle (3) and to a plug (4) that can be inserted and removably locked into the same buckle (3), the harness further comprising a locking group for keeping the plug (4) locked into the buckle (3) and a release button (100) to release the plug (4) from the buckle (3),
- said switch (10) is disposed in the state (B) of activation of the alarm function by a force (Fl) exerted by the user on the plug (4) for inserting it in the buckle (3) and in the state (A) of deactivation of the alarm function by a force (F2) exerted by the user on the release button (100) to extract the plug (4) from the buckle (3), such that the alarm function is activated automatically with the insertion of the plug (4) into the buckle (3) and is automatically deactivated with the extraction of the plug (4) from the buckle (3) by means of the release button (100),
- the buckle (3) comprises a plate (32), said plate (32) having an anchoring lower side with a first slot (30) for connecting it to the seat via a belt anchorage and, on the opposite side, a slit (31) in which the plug (4) can be inserted, the first slot (30) and the slit (31) being oriented orthogonally relative to one another,
- the locking group comprises a body (40) provided below the slit (31), said body (40) being pushed upwards by a spring (7) and assuming a raised position and respectively a lowered position when the plug (4) is inserted into the slit (31) or extracted therefrom, said body being located in correspondence of a second slot (35) of the plate (32) oriented parallel to the slit (31),
- a transverse appendix (430) of the body (40) passes through the second slot (35), said appendix (430) being connected with the switch (10), such that the displacement of said body (40) determined by the insertion of the plug into the buckle,
and respectively by its extraction, causes the activation or deactivation of the alarm function of the transmitter (1) through the switch (10).

2. Alarm system according to claim 1, **characterized in that** said switch (10) is a slide switch and the element (40) of the locking group to which it is attached moves parallel to the plug (4) when the latter is inserted into the buckle (3) or extracted therefrom.

3. Alarm system according to one or more of the preceding claims, **characterized in that** the said transmitting unit (1) includes a circuit (11) solid with one side of the buckle (3).

## Patentansprüche

1. Alarmsystem, umfassend eine Sendereinheit (1) und eine Empfängereinheit (2), die im drahtlosen Modus arbeiten, wobei die Empfängereinheit (2) ein leuchtendes und/oder akustisches und/oder Vibrationsalarmsignal emittiert, wenn der Abstand zwischen den beiden Einheiten (1, 2) einen voreingestellten Wert überschreitet, und wobei die Sendereinheit (1) mit einem Schalter (10) versehen ist, dessen Zustand (A, B) die Aktivierung oder Deaktivierung einer Alarmfunktion des Alarmsystems bestimmt, wobei
- die Sendereinheit (1) in die Schnalle (3) des Geschirrs eines Kindersicherheitssitzes für Kraftfahrzeuge integriert ist, wobei das Geschirr eine vorgegebene Anzahl von Gurten umfasst, die separat mit der gleichen Schnalle (3) und mit einem Stecker (4) verbunden sind, der in die gleiche Schnalle (3) eingeführt und entfernbar hiermit verriegelt werden kann, wobei das Geschirr ferner eine Verriegelungsgruppe, um den Stecker (4) in der Schnalle (3) verriegelt zu halten, und eine Freigabetaste (100), um den Stecker (4) aus der Schnalle (3) freizugeben, umfasst,
- der Schalter (10) durch eine Kraft (F1), die von dem Benutzer auf den Stecker (4) ausgeübt wird, um ihn in die Schnalle (3) einzuführen, in dem Zustand (B) der Aktivierung der Alarmfunktion angeordnet ist, und durch eine Kraft (F2), die durch den Benutzer auf die Freigabetaste (100) ausgeübt wird, um den Stecker (4) aus der Schnalle (3) herauszuziehen, in dem Zustand (A) der Deaktivierung der Alarmfunktion angeordnet ist, so dass die Alarmfunktion automatisch mit dem Einführen des Steckers (4) in die Schnalle (3) aktiviert wird und automatisch mit dem Herausziehen des Steckers (4) aus der Schnalle (3) mithilfe der Freigabetaste (100) deaktiviert wird,
- die Schnalle (3) eine Platte (32) umfasst, wobei die Platte (32) eine verankernde niedrigere Seite mit einem ersten Schlitz (30) zu ihrer Verbindung mit dem Sitz über eine Gurtverankerung und auf der gegenüberliegenden Seite einen Schlitz (31), in den der Stecker (4) eingeführt werden kann, aufweist, wobei der erste Schlitz (30) und der Schlitz (31) orthogonal zueinander ausgerichtet sind,
- die Verriegelungsgruppe einen Körper (40) umfasst, der unter dem Schlitz (31) vorgesehen ist, wobei der Körper (40) durch eine Feder (7) nach oben gedrückt wird und eine erhabene Position einnimmt bzw. eine abgesenkte Position, wenn der Stecker (4) in den Schlitz (31) eingeführt ist oder aus diesem herausgezogen ist, wobei der Körper sich in Übereinstimmung mit einem zweiten Schlitz (35) der Platte (32) befindet, der parallel zu dem Schlitz (31) ausgerichtet ist,
- ein Querfortsatz (430) des Körpers (40) durch den zweiten Schlitz (35) verläuft, wobei der Fortsatz (430) mit dem Schalter (10) verbunden ist, so dass die Verschiebung des Körpers (40), die durch das Einführen des Steckers in die Schnalle bzw. durch sein Herausziehen bestimmt wird, die Aktivierung oder Deaktivierung der Alarmfunktion des Senders (1) durch den Schalter (10) bewirkt.

2. Alarmsystem nach Anspruch 1, **dadurch gekennzeichnet, dass** der Schalter (10) ein Schiebeschalter ist und das Element (40) der Verriegelungsgruppe, an der er befestigt ist, sich parallel zu dem Stecker (4) bewegt, wenn letzterer in die Schnalle (3) eingeführt wird oder daraus herausgezogen wird.

3. Alarmsystem nach einem oder mehreren der vorstehenden Ansprüche, **dadurch gekennzeichnet, dass** die Sendereinheit (1) eine Schaltung (11) umfasst, die mit einer Seite der Schnalle (3) massiv ist.

## Revendications

1. Système d'alarme, comprenant une unité émettrice (1) et une unité réceptrice (2) fonctionnant dans un mode sans fil, dans lequel l'unité réceptrice (2) émet un signal d'alarme lumineux et/ou acoustique et/ou vibratoire lorsque la distance entre lesdites unités (1, 2) dépasse une valeur préréglée, et dans lequel l'unité émettrice (1) est pourvue d'un commutateur (10) dont un état (A, B) détermine l'activation ou la désactivation d'une fonction d'alarme du système d'alarme, dans lequel
- ladite unité émettrice (1) fait partie intégrante de la boucle (3) du harnais d'un siège de sécurité enfant pour véhicules à moteur, le harnais comprenant un nombre prédéterminé de ceintures reliées séparément à la même boucle (3) et à un raccord mâle (4) qui peut être inséré et verrouillé, de manière amovible, dans la même boucle (3), le harnais comprenant en outre un groupe de verrouillage pour maintenir le raccord mâle (4) verrouillé dans la boucle (3) et un bouton de libération (100) pour libérer le raccord mâle (4) de la boucle (3),
- ledit commutateur (10) est disposé dans l'état (B) d'activation de la fonction d'alarme par une force (F1) exercée par l'utilisateur sur le raccord mâle (4) pour l'insérer dans la boucle (3) et dans l'état (A) de désactivation de la fonction d'alarme par une force (F2) exercée par l'utilisateur sur la fonction de libération (100) pour extraire le raccord mâle (4) de la boucle (3), de sorte que la fonction d'alarme soit activée automatiquement avec l'insertion du raccord mâle (4) dans la boucle (3) et soit désactivée automatiquement avec l'extraction du raccord mâle (4) de la boucle (3) au moyen du bouton de libération (100),
- la boucle (3) comprend une plaque (32), ladite plaque (32) ayant un côté inférieur d'ancrage avec une première encoche (30) pour la raccorder au siège via un ancrage de ceinture et, du côté opposé, une fente dans laquelle le raccord mâle (4) peut être inséré, la première encoche (30) et la fente (31) étant orientées orthogonalement l'une par rapport à l'autre,
- le groupe de verrouillage comprend un corps (40) prévu au-dessous de la fente (31), ledit corps (40) étant poussé vers le haut par un ressort (7) et adoptant une position relevée et respectivement une position abaissée lorsque le raccord mâle (4) est inséré dans la fente (31) ou est extrait de celle-ci, ledit corps étant situé en correspondance avec une seconde encoche (35) de la plaque (32) orientée parallèlement à la fente (31),
- un appendice transversal (430) du corps (40) passe à travers la seconde encoche (35), ledit appendice (430) étant relié au commutateur (10), de sorte que le déplacement dudit corps (40) déterminé par l'insertion du raccord mâle dans la boucle et respectivement par son extraction, provoque l'activation ou la désactivation de la fonction d'alarme de l'émetteur (1) par l'intermédiaire du commutateur (10).

2. Système d'alarme selon la revendication 1, **caractérisé en ce que** ledit commutateur (10) est un commutateur coulissant et l'élément (40) du groupe de verrouillage auquel il est attaché se déplace parallèlement au raccord mâle (4) lorsque celui-ci est inséré dans la boucle (3) ou est extrait de celle-ci.

3. Système d'alarme selon une ou plusieurs des revendications précédentes, **caractérisé en ce que** ladite unité émettrice (1) inclut un circuit (11) solidaire d'un côté de la boucle (3).
